(19) **Europäisches Patentamt**
European Patent Office
Office européen des brevets

(11) **EP 1 917 511 B1**

(12) **EUROPÄISCHE PATENTSCHRIFT**

(45) Veröffentlichungstag und Bekanntmachung des Hinweises auf die Patenterteilung:
**04.07.2018  Patentblatt 2018/27**

(21) Anmeldenummer: **06776816.8**

(22) Anmeldetag: **12.08.2006**

(51) Int Cl.:
**G01M 9/06** *(2006.01)*     **G01M 17/007** *(2006.01)*

(86) Internationale Anmeldenummer:
**PCT/EP2006/008002**

(87) Internationale Veröffentlichungsnummer:
**WO 2007/022892 (01.03.2007 Gazette 2007/09)**

(54) **VERSUCHSTAND UND VERFAHREN FÜR AERODYNAMISCHE MESSUNGEN AN EINEM GEGENSTAND**

TEST BED AND METHOD FOR AERODYNAMIC MEASUREMENTS ON AN OBJECT

BANC D'ESSAI ET PROCEDE DE MESURES AERODYNAMIQUES SUR UN OBJET

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.08.2005  DE 102005040445**

(43) Veröffentlichungstag der Anmeldung:
**07.05.2008  Patentblatt 2008/19**

(73) Patentinhaber: **Bayerische Motoren Werke Aktiengesellschaft
80809 München (DE)**

(72) Erfinder:
  • **EBELING, Welf
    80637 Muenchen (DE)**
  • **EBBINGHAUS, Karlheinz
    80992 Muenchen (DE)**
  • **MERCKER, Edzard
    80935 Muenchen (DE)**
  • **MEYER, Oliver
    80993 Muenchen (DE)**

(74) Vertreter: **Schernhammer, Herbert et al
Bayerische Motoren Werke AG
Patentabteilung AJ-5
80788 München (DE)**

(56) Entgegenhaltungen:
EP-A1- 0 421 029     DE-A1- 10 338 638
DE-C1- 3 224 941     FR-A1- 2 538 924
JP-A- 1 074 006     JP-A- 2002 071 532
JP-A- 2005 003 621     JP-A- 2005 127 858
US-A- 4 494 022     US-A1- 2003 066 361

• JUNG-HUA YANG ET AL: "Adaptive sliding-mode based voltage-controlled active magnetic bearing system" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, Bd. VOL. 3 OF 3. CONF. 29, 2. November 2003 (2003-11-02), Seiten 1950-1955, XP010691264 ISBN: 0-7803-7906-3

**Beschreibung**

Die Erfindung betrifft einen Versuchsstand für aerodynamische Messungen an einem Gegenstand, insbesondere einem Fahrzeug, wobei ein derartiger Versuchsstand auch als Windkanalwaage bezeichnet wird, welche mit einer Waagenplatte versehen ist. Die Waagenplatte dient zum Abstützen des Gewichts des Gegenstandes und ist auf einer Lagerung relativ zu einer ortsfesten Umgebung gelagert. Ferner betrifft die Erfindung ein Verfahren zum Messen aerodynamischer Kräfte an einem Gegenstand, insbesondere einem Fahrzeug.

Aus DE 103 38 638 A1 ist ein Versuchstand für aerodynamische Messungen bekannt, bei dem mindestens eine Aufstandsfläche zum Aufnehmen des Gewichts eines Fahrzeugs mit einem Laufband zum Simulieren einer Fahrbahn gestaltet und dieses Laufband insgesamt auf einer Waagenplatte angeordnet ist. Die Waagenplatte ist auf einer hydrostatischen Lagerung relativ zu einer ortsfesten Umgebung gelagert. Alternativ können auch Luftlager zum Einsatz kommen. Mindestens eine Messeinrichtung in Form mehrerer Wägezellen ermittelt die auf das Fahrzeug wirkenden Kräfte anhand der Bewegungstendenz der Waagenplatte relativ zur ortsfesten Umgebung.

Mit einem derartigen Versuchstand und einem zugeordneten Messverfahren ist zwar bereits eine vergleichsweise genaue Messung von sich an dem Fahrzeug ergebenden aerodynamischen Kräften möglich, dennoch ergeben sich Ungenauigkeiten, die es weiter möglichst zu vermeiden gilt.

Ferner ist es aus der Veröffentlichung der National Pingtung University of Science and Technology, Taiwan, Jung-Hua Yang und Chyuan-Yow Tseng, Adaptive Sliding Mode Based Voltage Controlled Active Magnetic Bearing System, grundsätzlich bekannt, dass sich aktive Magnetlager im Vergleich zu mechanischen und hydrostatischen Lagern durch eine wesentlich geringere Reibung auszeichnen.

Des Weiteren ist in der JP 2005 003621 A eine Vorrichtung beschrieben, die es ermöglicht, ein relativ kleines Objekt, in dessen Innerem ein Dauermagnet angebracht ist und das von Elektromagneten umgeben ist, durch magnetische Kräfte berührungslos im Raum zu halten.

Außerdem ist es aus der JP 2002 071532 A bekannt, Magnetlager als Schwingungserreger einzusetzen. Schließlich beschreibt die US-A-4,494,022 einen speziell gestalteten elektromagnetischen Kraftaufnehmer.

Ferner ist aus der FR 2 538 924 A1 ein aerodynamischer Prüfstand bekannt, bei dem der Spalt zwischen dem Modell und einer Wand des Windkanals von einer Dichtmanschette überbrückt wird. Die Dichtmanschette wird von zwei Magneten in einem möglichst kleinen konstanten Abstand zur Wand des Windkanals gehalten.

Es ist eine Aufgabe der Erfindung, einen Versuchsstand und ein Verfahren für aerodynamische Messungen an einem Fahrzeug zu schaffen, mittels denen höhere Messgenauigkeiten erzielt werden können.

Die Aufgabe ist erfindungsgemäß mit einer Vorrichtung gemäß Anspruch 1 und einem Verfahren gemäß Anspruch 5 gelöst. Vorteilhafte Weiterbildungen sind in den abhängigen Ansprüchen beschrieben. Erfindungsgemäß ist ein gattungsgemäßer Versuchsstand dadurch gekennzeichnet, dass die Lagerung mit mindestens einem Magnetlager gestaltet ist. Das erfindungsgemäße Verfahren sieht ein Abstützen des Gegenstandes an einer Waagenplatte eines Versuchsstandes und ein Lagern der Waagenplatte mittels mindestens eines Magnetlagers vor.

Die Erfindung erreicht das angestrebte Ziel einer erhöhten Messgenauigkeit, indem die Lagerung einer Waagenplatte einer Windkanalwaage verbessert wird. Die erfindungsgemäßen Magnetlager bzw. magnetischen Lagerungen schaffen eine vollständige Reibungsfreiheit an den Lagern der Waagenplatte. Erfindungsgemäß sind beispielsweise mindestens drei Magnetlager zwischen einem ortsfesten Grundrahmen und einem Wägerahmen angeordnet. Mit den erfindungsgemäßen Magnetlagern kann ferner der technische Aufwand für die Realisierung und den Betrieb eines Versuchstandes insgesamt reduziert werden. So kann beispielsweise auf eine Schmierung und/oder Kühlung der Lager verzichtet werden. Auch der Wartungsaufwand für die erfindungsgemäßen Magnetlager ist, da diese berührungslos arbeiten, vergleichsweise gering. Schließlich ist erfindungsgemäß auch das Problem einer eingeschränkten Funktionssicherheit behoben, welches teilweise bei bestehenden Versuchsständen vorzufinden ist.

Weiterhin erfindungsgemäß ist das mindestens eine Magnetlager mit mindestens einer Magnetspule und einer Stromquelle gestaltet, mit der elektrischer Strom durch die Magnetspule gesendet werden kann. Mit anderen Worten ist bei der Erfindung die Lagerung der Waagenplatte mittels mindestens eines elektromagnetischen bzw. aktiven Magnetlagers gestaltet, welches insbesondere einen elektrischmechanischen Energiewandler darstellt. Ein derartiges aktives Magnetlager ist nicht allein mit Permanentmagneten versehen, sondern weist mindestens eine Magnetspule auf, mittels der ein Magnetfeld wahlweise erzeugt werden kann. Die magnetischen Kräfte des Magnetfeldes der Spule lassen sich durch eine Veränderung des durch die Magnetspule von einer Stromquelle aus gesendeten elektrischen Stroms, insbesondere durch eine Änderung der Stromstärke dieses elektrischen Stroms beeinflussen. Die Folge ist die Möglichkeit einer gezielten Beeinflussung der Lagereigenschaften des erfindungsgemäßen Lagers.

Weiterhin erfindungsgemäß ist ferner eine Auswerteeinrichtung vorgesehen, mit der eine Änderung des durch die Magnetspule fließenden elektrischen Stroms ermittelt und in eine Information über eine Änderung der an der Waagenplatte wirkenden Kräfte gewandelt werden kann. Eine Änderung des durch die Magnetspule fließenden Stroms kann sich insbesondere durch eine (geringfügige) Lageänderung der Waagenplatte relativ zu einer ortsfesten Umgebung ergeben. Ein derartiges erfindungsgemäßes aktives Magnetlager subsumiert in seiner Funktion sowohl eine vollständig reibungsfreie Lagerung als auch eine Messeinrichtung für an der Waagenplatte wirkende Kräfte und damit für die am Gegenstand wirkenden aerodynamischen Kräfte.

Durch Ändern des elektrischen Stroms in der mindestens einen Magnetspule der erfindungsgemäßen Lagerung ändern sich das Magnetfeld und damit die Kraftwirkung auf das zu lagernde Teil. Umgekehrt hat jede Änderung der auf das Magnetlager von außen wirkenden Kräfte eine Lageänderung bzw. zumindest eine Tendenz zu einer Lageänderung zur Folge. Im Magnetlager ergeben sich mit dieser Lageänderung Veränderungen des fließenden elektrischen Stroms. Um das zu lagernde Teil vorteilhaft entsprechend den wirkenden Kräften relativ zur ortsfesten Umgebung des Versuchsstandes in Position zu halten, ist daher erfindungsgemäß vorteilhaft eine Steuereinrichtung vorgesehen, mit der der durch die Magnetspule fließende elektrische Strom in Abhängigkeit von an der Waagenplatte wirkenden Kräften verändert werden kann. Es ist auf diese Weise eine Regeleinrichtung bzw. ein Regelkreis geschaffen, mittels denen bei einer Stromsteuerung als Ansteuerart beispielsweise ein Stellweg s und ein Streuerstrom I entsprechend folgender Gleichung auf eine Kraft F abgebildet werden:

$$F: (I,\ s)\ \longmapsto (k_s - k_m)s + k_I I + K_{I2}I^2 s + k_{s2}s^2$$

wobei

| | | |
|---|---|---|
| $k_I$ | | Kraft-Strom-Faktor |
| $I$ | | Steuerstrom |
| $s$ | | Stellweg |
| $k_m$ | | mechanische Steifigkeit |
| $k_{I2}, k_{s2}$ | | Koeffizienten, die nichtlineare Effekte berücksichtigen |
| $k_s$ | | magnetische Steigigkeit |

Durch einen geeigneten Entwurf einer Steuerelektronik ist erfindungsgemäß die Regelungseinrichtung also zu einer Messeinrichtung weitergebildet bzw. erweitert worden. In dieser Funktion ersetzt das aktive Magnetlager sowohl ein herkömmliches hydraulisches Lager als auch herkömmliche Messeinrichtungen eines Wägesystems.

Diese Lösung, welche grundsätzlich auf jede Windkanalwaage mit einer Waagenplatte angewendet werden kann, wird besonders bevorzugt für einen Versuchsstand verwendet, bei dem ein Laufband zum Simulieren einer Umgebung des Gegenstandes vorgesehen ist und darüber hinaus vorteilhaft das Laufband auf der Waagenplatte abgestützt ist und der Gegenstand selbst seinerseits (insbesondere vollständig) auf dem Laufband abgestützt ist.

Insbesondere die systemimmanente Eigenschaft der funktionalen Zuordnung F = f(s, I) (siehe oben) von aktiven Magnetlagern eröffnet gemäß der Erfindung die Möglichkeit, durch Weg- und/oder Strommessung die aerodynamischen Kräfte zu bestimmen. Dadurch können die normalerweise notwendigen Wägezellen, wie beispielsweise Dehnmessstreifen oder Piezoelemente, einschließlich der dazugehörigen aufwändigen Messtechnik herkömmlicher Lagerungen entfallen.

Nachfolgend wird ein Ausführungsbeispiel eines erfindungsgemäßen Versuchsstandes für aerodynamische Messungen an einem Gegenstand anhand der beigefügten schematischen Zeichnungen näher erläutert. Es zeigt:

Fig. 1    eine stark vereinfachte Seitenansicht eines Ausführungsbeispiels eines erfindungsgemäßen Versuchsstandes für aerodynamische Messungen und

Fig. 2    eine stark vereinfachte Draufsicht auf den Versuchsstand gemäß Fig. 1.

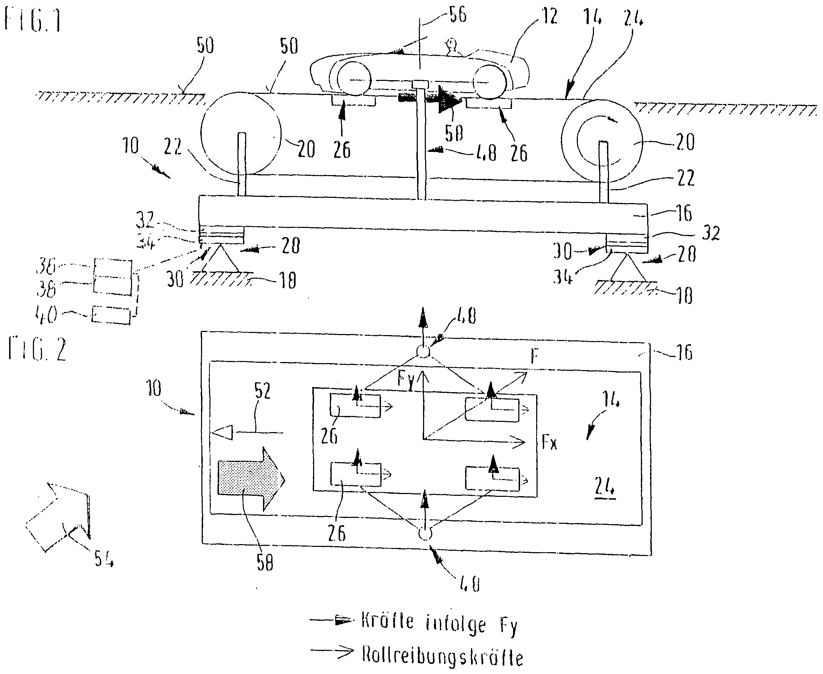

In den Fign. 1 und 2 ist ein Versuchsstand 10 für aerodynamische Messungen an einem Gegenstand in Gestalt eines Fahrzeugs 12 veranschaulicht, wobei der Versuchsstand 10 ein Laufband 14 und eine darunter liegende Waagenplatte 16 umfasst. Die Waagenplatte 16 ist relativ zu einer ortsfesten Umgebung 18 abgestützt.

Das Laufband 14 ist mit zwei Rollen 20 gebildet, die sich parallel zueinander erstrecken und an Rollenstützen 22 auf der Waagenplatte 16 abgestützt sind. Die Rollen 20 sind von einem Band 24 umschlossen, mit dem insgesamt vier Aufstandsflächen 26 zum Abstützen des auf dem Laufband 14 abgestellten Fahrzeugs 12 ausgebildet sind.

Die Waagenplatte 16 ist im Wesentlichen rechteckig und an ihren Eckbereichen mit insgesamt vier Lagerungen 28 an der ortsfesten Umgebung 18 abgestützt.

Die Lagerungen 28 sind jeweils als ein aktives Magnetlager 30 gestaltet, welches einerseits mindestens einen an der Waagenplatte 16 ortsfest angeordneten Permanentmagneten 32 und andererseits mindestens eine relativ zur Umgebung 18 ortsfest angebrachte Magnetspule 34 umfasst. An den Magnetspulen 34 der Magnetlager 30 ist ferner jeweils eine Stromquelle 36 angeschlossen, mittels der die Magnetspule 34 bestromt und ein magnetisches Feld erzeugt bzw. generiert werden kann. Das magnetische Feld führt zusammen mit dem Magnetfeld des zughörigen Permanentmagneten 32 dazu, dass am einzelnen Magnetlager 30 in gewissen Grenzen ein reibungsfreies Verschieben der Waagenplatte 16 relativ zur ortsfesten Umgebung 18 möglich ist.

An den Magnetspulen 34 ist ferner jeweils eine Auswerteeinrichtung 38 angeschlossen, mittels denen zusammen mit der zugehörigen Stromquelle 36 ein Regelkreis geschaffen ist. Mit dem Regelkreis wird durch Verändern des durch die einzelne Magnetspule 34 fließenden Stroms das zugehörige Magnetfeld und damit die Kraftwirkung auf die Waagenplatte 16 verändert. Umgekehrt hat jede Änderung der auf das Magnetlager 30 von außen einwirkende Kraft, wie beispielsweise eine aerodynamische Kraft am Fahrzeug 12, eine Lagevariation und damit auch eine Stromänderung zur Folge.

Durch eine Auswertung der Tendenz dieser Stromänderung mittels der Auswerteeinrichtung 38 und einer entsprechenden Stromsteuerung mittels einer der Stromquelle 36 zugeordneten Steuereinrichtung 40 werden dann z. B. der Stellweg s und der Steuerstrom I entsprechend der oben genannten Gleichung

$$F: (I, s) \longmapsto (k_s - k_m)s + k_I I + K_{I2} I^2 s + k_{s2} s^2$$

auf die Kraft F abgebildet und auf diese Weise wird eine Messeinrichtung geschaffen mit der die am Fahrzeug 12 wirkenden aerodynamischen Kräfte während eines Versuchs in sehr einfacher Weise ermittelt werden können.

Wie oben erwähnt ist auf dem Versuchsstand 10 ein zu messendes Fahrzeug 12 auf den Aufstandsflächen 26 des Laufbandes 14 abgestellt. Mit Hilfe einer Fixiereinrichtung 48 wird das derart abgestellte Fahrzeug 12 auf einer simulierten Fahrbahnebene 50 gegen ein Herabwandern vom Versuchsstand 12 befestigt.

Unter dem Fahrzeug 12 kann mit Hilfe der Rollen 20 das Band 24 in Umlauf gebracht werden, sodass für das Fahrzeug 12 eine Fahrtrichtung 52 simuliert wird. Mit Hilfe eines nicht dargestellten Windkanals kann an dem auf dem Versuchsstand 10 angeordneten Fahrzeug 12 Wind (siehe Windrichtungspfeil 54 in Fig. 2) aufgebracht und simuliert werden. Die durch den aufgebrachten Wind am Fahrzeug 12 wirkenden Längs- und Seitenkräfte (Fx und Fy), Momente und Auftriebskräfte (Fz) werden dann während eines Versuchs mit Hilfe der zugleich als Messeinrichtung wirkenden, oben erläuterten, aktiven Magnetlager 30 ermittelt.

An dem Fahrzeug 12 wirkt während eines Versuches also gemäß dem Windrichtungspfeil 54 eine Windkraft F. Diese Windkraft F lässt sich in die beiden Kraftkomponenten Längskraft Fx und Seitenkraft Fy aufteilen. Die Windkraftkomponenten Fx und Fy führen zu einer Stützkraft des Fahrzeugs 12 an der Fixiereinrichtung 48. Die Kräfte werden über die Fixiereinrichtung 48 auf die Waagenplatte 16 und von dort auf die vier Magnetlager 30 übertragen. Auf diese Weise werden mit den Magnetlagern 30 die aerodynamischen Längs- und Seitenkräfte am Fahrzeug 12 gemessen.

Während sich die Oberseite des Bandes 24 in eine Richtung 58 entgegen der Fahrtrichtung 52 bewegt, wirken an den Rädern des Fahrzeugs 12 Rollreibkräfte. Diese Rollreibkräfte werden von dem Antrieb des Bandes 24 bzw. der Rollen 20 kompensiert. Mit den Magnetlagern 30 werden dabei nur die am Fahrzeug 12 wirkenden Windkräfte bzw. -momente ermittelt, während die Rollreibkräfte des Fahrzeugs 12 auf dem Band 24 über die Fixiereinrichtung 48 an die Waagenplatte 16 abgeleitet werden und nicht in die Messung der aerodynamischen Kräfte und Momente eingehen.

Die auf das Fahrzeug 12 wirkenden und insbesondere auch durch den Fahrtwind begründeten Auftriebskräfte Fz werden ebenfalls durch die oben erläuterten Magnetlager 30 ermittelt. Die Magnetlager 30 ermitteln dabei das (lokale) "Anheben" oder "Niederdrücken" des Fahrzeugs aufgrund der Auftriebskräfte in paralleler Richtung zur Hochachse 56 des Fahrzeugs 12.

Bezugszeichenliste:

| 10 | Versuchsstand |
|----|---------------|
| 12 | Fahrzeug |
| 14 | Laufband |
| 16 | Waagenplatte |
| 18 | ortsfeste Umgebung |
| 20 | Rolle |
| 22 | Rollenstütze |
| 24 | Band |
| 26 | Aufstandsfläche |
| 28 | Lagerung |
| 30 | Magnetlager |
| 32 | Permanentmagnet |

34    Magnetspule
36    Stromquelle
38    Auswerteeinrichtung
40    Steuereinrichtung
48    Fixiereinrichtung
50    Fahrbahnebene
52    Fahrtrichtung
54    Windrichtung
56    Hochachse
58    Bewegungsrichtung der Oberseite des Bandes

**Patentansprüche**

1. Versuchsstand (10) eingerichtet für aerodynamische Messungen an einem Gegenstand, insbesondere einem Fahrzeug (12), mit einer Waagenplatte (16), die zum Abstützen des Gewichts des Gegenstandes dient und auf einer Lagerung (28) relativ zu einer ortsfesten Umgebung (18) gelagert ist, **dadurch gekennzeichnet, dass** die Lagerung (28) der Waagenplatte (16) mit mindestens einem Magnetlager (30) gestaltet ist, wobei das mindestens eine Magnetlager (30) mit mindestens einer Magnetspule (34) und einer Stromquelle (36) gestaltet ist, mit der elektrischer Strom durch die Magnetspule (34) gesendet werden kann und wobei der Versuchsstand eine Auswerteeinrichtung (38) aufweist, die eingerichtet ist, eine Änderung des durch die Magnetspule (34) fließenden elektrischen Stroms zu ermitteln und diese Änderung in eine Information über eine Änderung der an der Waagenplatte (16) wirkenden Kräfte zu wandeln, so dass damit die am Gegenstand wirkenden aerodynamischen Kräfte gemessen werden können.

2. Versuchsstand nach Anspruch 1,
**dadurch gekennzeichnet, dass** der Versuchsstand (10) eine Steuereinrichtung (40) aufweist, mit der der durch die Magnetspule (34) fließende elektrische Strom in Abhängigkeit von an der Waagenplatte (16) wirkenden Kräften verändert werden kann.

3. Versuchsstand nach Anspruch 1 oder 2,
**dadurch gekennzeichnet, dass** der Versuchsstand (10) ein Laufband (14) zum Simulieren einer Umgebung des Gegenstands aufweist.

4. Versuchsstand nach Anspruch 3,
**dadurch gekennzeichnet, dass** das Laufband (14) auf der Waagenplatte (16) abgestützt ist und der Gegenstand auf dem Laufband (14) abgestützt ist.

5. Verfahren zum Messen aerodynamischer Kräfte an einem Gegenstand, insbesondere einem Fahrzeug (12), mit den Schritten:

• Abstützen des Gegenstandes an einer Waagenplatte (16) eines Versuchsstandes (10),
• Lagern der Waagenplatte (16) mittels mindestens eines Magnetlagers (30),
• Senden von elektrischem Strom durch mindestens eine am Magnetlager (30) vorgesehene Magnetspule (34),
• Ermitteln einer Änderung des elektrischen Stroms und
• Wandeln der ermittelten Änderung in eine Information über an der Waagenplatte (16) wirkende Kräfte, so dass damit die am Gegenstand wirkenden aerodynamischen Kräfte gemessen werden können.

6. Verfahren nach Anspruch 5, **gekennzeichnet durch** den Schritt: Verändern des durch die Magnetspule (34) fließenden elektrischen Stroms in Abhängigkeit von an der Waagenplatte (16) wirkenden Kräften.

7. Verfahren nach Anspruch 5 oder 6,
**gekennzeichnet durch** die Schritte: Abstützen eines Laufbandes (14) zum Simulieren einer Umgebung des Gegenstandes an der Waagenplatte (16) und Abstützen des Gegenstandes an dem Laufband (14).

**Claims**

1. A test bed (10) set up for conducting aerodynamic measurements on an object, especially a vehicle (12), with a weighing plate (16) which serves to support the weight of the object and is mounted on a bearing means (28) relative to a stationary environment (18),

**characterised in that** the bearing means (28) of the weighing plate (16) is configured with at least one magnetic bearing (30), the at least one magnetic bearing (30) being configured with at least one magnetic coil (34) and a power source (36) with which electric current can be transmitted through the magnetic coil (34), and the test bed having an evaluation means (38) which is set up to ascertain a change in the electric current flowing through the magnetic coil (34) and to convert this change into information about a change in the forces acting on the weighing plate (16), so that the aerodynamic forces acting on the object can be measured therewith.

2. A test bed according to Claim 1,
**characterised in that** the test bed (10) has a control means (40) with which the electric current flowing through the magnetic coil (34) can be changed as a function of forces acting on the weighing plate (16).

3. A test bed according to Claim 1 or Claim 2,
**characterised in that** the test bed (10) has a moving belt (14) for simulating an environment of the object.

4. A test bed according to Claim 3,
**characterised in that** the moving belt (14) is supported on the weighing plate (16) and the object is supported on the moving belt (14).

5. A method for measuring aerodynamic forces on an object, especially a vehicle (12), having the steps:

   • supporting the object on a weighing plate (16) of a test bed (10),
   • mounting the weighing plate (16) by means of at least one magnetic bearing (30),
   • transmitting electric current through at least one magnetic coil (34) provided on the magnetic bearing (30),
   • ascertaining a change in the electric current, and
   • converting the ascertained changed into information about forces acting on the weighing plate (16), so that the aerodynamic forces acting on the object can be measured therewith.

6. A method according to Claim 5, **characterised by** the step: changing the electric current flowing through the magnetic coil (34) as a function of forces acting on the weighing plate (16).

7. A method according to Claim 5 or Claim 6,
**characterised by** the steps: supporting a moving belt (14) to simulate an environment of the object on the weighing plate (16) and supporting the object on the moving belt (14).


**Revendications**

1. Banc d'essai (10) permettant d'effectuer des mesures aérodynamiques sur un objet, en particulier un véhicule (12) comprenant une plaque horizontale (16) servant à supporter le poids de l'objet et montée sur un système de paliers (28) par rapport à un environnement fixe (18),
**caractérisé en ce que**
le système de paliers (28) de la plaque horizontale (16) est équipé d'au moins un palier magnétique (30), le palier magnétique (30) étant équipé d'au moins une bobine magnétique (34) et d'une source de courant (36) permettant de transférer du courant électrique au travers de la bobine magnétique (34), le banc d'essai comportant un dispositif d'exploitation (38) permettant de déterminer une variation du courant électrique passant au travers de la bobine magnétique (34), et de transformer cette variation en une information relative à une variation des forces agissant sur la plaque horizontale (16) de sorte qu'ainsi les forces aérodynamiques agissant sur l'objet puissent être mesurées.

2. Banc d'essai conforme à la revendication 1,
**caractérisé en ce qu'**
il comporte un dispositif de commande (40) permettant de faire varier le courant électrique passant dans la bobine magnétique (34) en fonction des forces agissant sur la plaque horizontale (16).

3. Banc d'essai conforme à la revendication 1 ou 2,
**caractérisé en ce qu'**
il comporte une bande de roulement (14) permettant de simuler l'environnement de l'objet.

**4.** Banc d'essai conforme à la revendication 3,
**caractérisé en ce que**
la bande de roulement (14) s'appuie sur la plaque horizontale (16) et l'objet s'appuie sur la bande de roulement (14).

**5.** Procédé de mesure de forces aérodynamiques agissant sur un objet, en particulier un véhicule (12) comprenant des étapes consistant à :

- faire s'appuyer l'objet sur une plaque horizontale (16) d'un banc d'essai (10),
- monter la plaque horizontale (16) au moyen d'au moins un palier magnétique (30),
- faire passer un courant électrique au travers d'au moins une bobine magnétique (34) prévue sur le palier magnétique (30),
- détecter une variation du courant électrique, et
- transformer la variation détectée en une information relative à des forces agissant sur la plaque horizontale (16) de sorte qu'ainsi les forces aérodynamiques agissant sur l'objet puissent être mesurées.

**6.** Procédé conforme à la revendication 5,
**caractérisé par**
une étape consistant à faire varier le courant électrique passant au travers de la bobine magnétique (34) en fonction de forces agissant sur la plaque horizontale (16).

**7.** Procédé conforme à la revendication 5 ou 6,
**caractérisé par**
des étapes consistant à faire s'appuyer une bande de roulement (14) sur la plaque horizontale (16) pour simuler l'environnement de l'objet et faire s'appuyer l'objet sur la bande de roulement (14).

FIG. 1

FIG. 2

Kräfte infolge Fy
Rollreibungskräfte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10338638 A1
- JP 2005003621 A
- JP 2002071532 A
- US 4494022 A
- FR 2538924 A1